**Europäisches Patentamt**

**European Patent Office**

**Office européen des brevets**

(19)

(11) Numéro de publication : **0 487 407 A1**

# (12) DEMANDE DE BREVET EUROPEEN

(21) Numéro de dépôt : **91403115.8**

(22) Date de dépôt : **19.11.91**

(51) Int. Cl.⁵ : **G02B 27/28, H04N 9/31**

(30) Priorité : **21.11.90 FR 9014533**

(43) Date de publication de la demande :
**27.05.92 Bulletin 92/22**

(84) Etats contractants désignés :
**BE DE FR GB IT NL SE**

(71) Demandeur : **SEXTANT AVIONIQUE S.A.**
**5/7 rue Jeanne Braconnier Parc Tertiaire**
**F-92366 Meudon la Forêt Cédex (FR)**

(72) Inventeur : **Lach, Patrick, Cabinet**
**BALLOT-SCHMIT**
**7 rue Le Sueur**
**F-75116 Paris (FR)**

(74) Mandataire : **Ballot, Paul Denis Jacques et al**
**Cabinet Ballot-Schmit, 7, rue le Sueur**
**F-75116 Paris (FR)**

(54) **Dispositif de visualisation en couleur par projection mettant en oeuvre des valves optiques.**

(57)    L'invention a pour but d'améliorer le rendement lumineux de ce type de dispositif, sans nuire à l'homogénéité en couleur et en luminance de l'image ; et tout en limitant leur encombrement.

Dans un dispositif selon l'invention, trois valves optiques sont placées en regard de trois faces (5', 6', 7') d'un cube recombineur (C').

Les moyens de séparation d'un faisceau de lumière blanche (F) en trois faisceaux de lumières colorées (F1, F2, F3) consistent en un cube séparateur (C). Les intersections (3, 3') des surfaces traitées (1, 2 ; 1', 2') des deux cubes (C, C') sont alignées, et ces surfaces traitées sont deux à deux dans un même plan.

De plus, à l'extérieur des cubes (C, C'), les trajets optiques des trois faisceaux (F1, F2, F3) sont identiques, de manière que les distances optiques entre la source de lumière blanche et les valves soient elles-mêmes identiques.

FIG. 4

EP 0 487 407 A1

La présente invention concerne un dispositif de visualisation en couleur mettant en oeuvre des valves optiques pour produire une image, par projection sur un support, de faisceaux de lumières colorées modulés et recombinés.

Les systèmes actuels de ce type comportent généralement une source de lumière blanche dont le flux lumineux est séparé en trois faisceaux de lumières colorées (par exemple rouge, verte et bleue). La lumière des trois faisceaux est ensuite polarisée, puis dirigée vers trois matrices à cristal liquide dont chacune module le faisceau qu'elle reçoit en fonction de signaux de commande. Les trois images qui se forment sur les matrices sont alors agrandies, et projetées simultanément par un ou plusieurs objectifs sur le support final de l'image, soit par exemple un écran, un mur, etc.

Un des problèmes posés par les systèmes actuels est leur rendement lumineux : il faut récupérer le maximum de flux lumineux émis par la source pour que l'image finale soit la plus lumineuse possible, tout en veillant à ne pas dégrader son homogénéité en couleur et en luminance. Pour cela, il est nécessaire que l'éclairement en un point quelconque de l'une des matrices soit égal à celui du point correspondant sur chacune des autres matrices, de façon à éviter toute variation de couleur au sein de l'image finale. On sait que cette condition peut être réalisée facilement en prévoyant égales les distances entre la source et les trois matrices.

Un autre problème est de réduire au maximum l'encombrement des systèmes de recombinaison et de projection des trois images colorées quand on utilise un objectif unique pour les projeter et les agrandir. En effet, dans ce cas, les trois faisceaux colorés, après avoir traversé chacun une matrice, doivent être recombinés pour former une image en couleur. Minimiser l'encombrement des systèmes de recombinaison et de projection revient à réduire les distances, par ailleurs égales, de chacune des matrices à l'objectif de projection. Les moyens de recombinaison permettant cela consistent en deux surfaces planes traitées qui se coupent en leur milieu à angle droit, en formant une figure géométrique sensiblement en forme de cube, d'où l'appellation de "cube recombineur" que l'on donnera dans la suite à ces moyens. Les trois matrices sont alors disposées en regard de trois faces du cube parallèles à l'intersection des surfaces traitées, de sorte que la lumière recombinée passe par la quatrième de ces faces en regard de laquelle est placé l'objectif de projection.

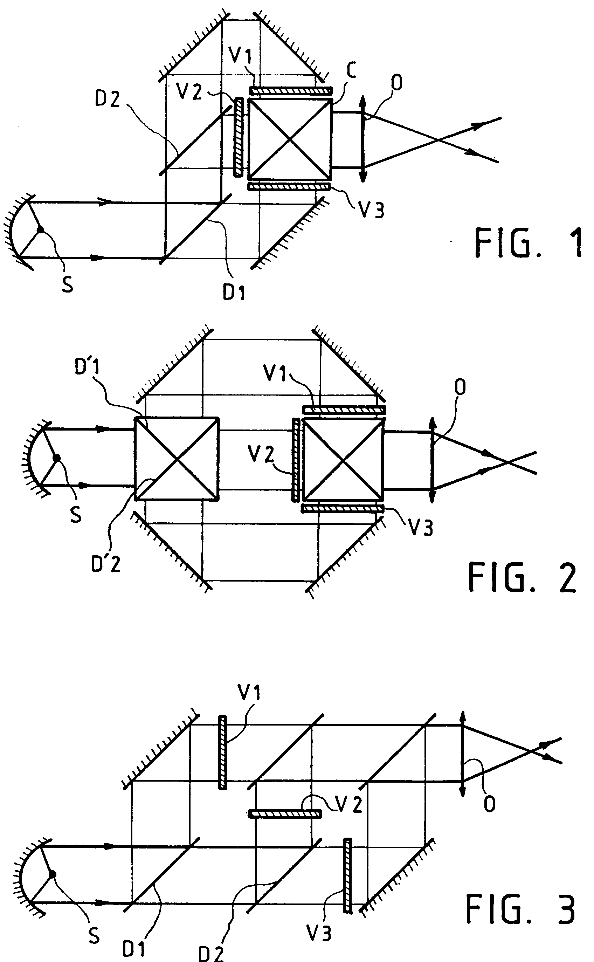

On trouve un tel arrangement des systèmes de recombinaison et de projection dans un projecteur divulgué par les brevets japonais n° 62-254589 et n° 62-22219 au nom de SEIKO, et représenté à la Fig. 1 des dessins annexés. Dans ce projecteur, la lumière blanche issue de la source S est divisée, au moyen de deux miroirs dichroïques D1, D2 placés parallèlement, en trois faisceaux de couleurs rouge, verte et bleue, qui sont dirigés respectivement vers des valves optiques V1, V2 et V3, lesquelles sont disposées de la manière décrite ci-dessus par rapport à un cube recombineur C et à une optique de projection O. Le dessin fait nettement apparaître que les distances de la source S aux valves V1, V2 et V3 ne sont pas égales, celle jusqu'à la valve V1 étant nettement plus longue.

La même remarque s'applique au projecteur décrit dans la demande de brevet EP-A-0 331 326 au nom de MATSUCHITA, lequel projecteur comprend un dispositif de séparation des faisceaux formé de deux miroirs dichroïques D'1, D'2 se coupant perpendiculairement en leur milieu comme l'illustre la Fig. 2 (disposition que l'on désignera, dans la suite, sous l'appellation de "cube séparateur", par analogie au cube recombineur déjà mentionné). Ici, les trajets égaux de la lumière entre la source S et les valves V1 et V3 sont très sensiblement plus grands que le trajet jusqu'à la valve V2.

Par contre, dans un autre projecteur connu par la demande de brevet EP-A-87201558.1 au nom de PHILIPS, et représenté à la Fig. 3, où le dispositif de séparation comprend deux miroirs dichroïques parallèles D1, D2, les distances entre la source S et les trois valves V1, V2 et V3 sont bien identiques. Mais alors, cette condition impose une disposition des valves qui ne permet pas de minimiser la distance des trois valves à l'objectif de projection O en utilisant un cube recombineur.

Le but de l'invention est de prévoir, dans des dispositifs de visualisation en couleur mettant en oeuvre des moyens de séparation d'un faisceau de lumière blanche en trois faisceaux de lumières colorées, trois valves optiques, des moyens de recombinaison des faisceaux colorés et une optique de projection, des arrangements tels que l'on puisse utiliser un cube recombineur pour minimiser la distance des valves à l'optique de projection, pour minimiser l'encombrement, tout en ayant des distances identiques entre la source de lumière et les trois valves.

A cet effet, un dispositif selon l'invention comprenant un cube recombineur, trois valves optiques en regard de trois faces dudit cube parallèles à l'intersection de ses surfaces traitées, et une optique de projection au-delà de la quatrième de ces faces, est caractérisé en ce que ses moyens séparateurs sont un cube séparateur dont l'intersection de ses surfaces traitées est sur la même ligne que ladite intersection du cube recombineur, en ce que les surfaces traitées du cube séparateur et du cube recombineur sont deux à deux dans un même plan, et en ce que les trajets des faisceaux de lumières colorées à l'extérieur desdits cubes séparateur et recombineur jusqu'à leurs valves respectives sont identiques.

L'invention sera mieux comprise à l'aide des explications qui vont suivre et des dessins annexés, dans lesquels :

les Figs. 1 à 3 représentent schématiquement trois dispositifs connus,

la Fig. 4 est une vue schématique, en perspective, d'un dispositif selon l'invention, dans une première forme de réalisation,

les Figs. 5 et 6 sont respectivement des vues frontale et de dessus du dispositif de la Fig. 4,

la Fig. 7 est une vue schématique d'un dispositif de polarisation utilisable dans un appareil semblable à celui des Figs. 4 à 6,

les Figs. 8 et 9 sont respectivement des vues frontale et de dessus d'un tel appareil, et

la Fig. 10 est une vue schématique, de côté, d'un dispositif selon l'invention, dans une autre forme de réalisation.

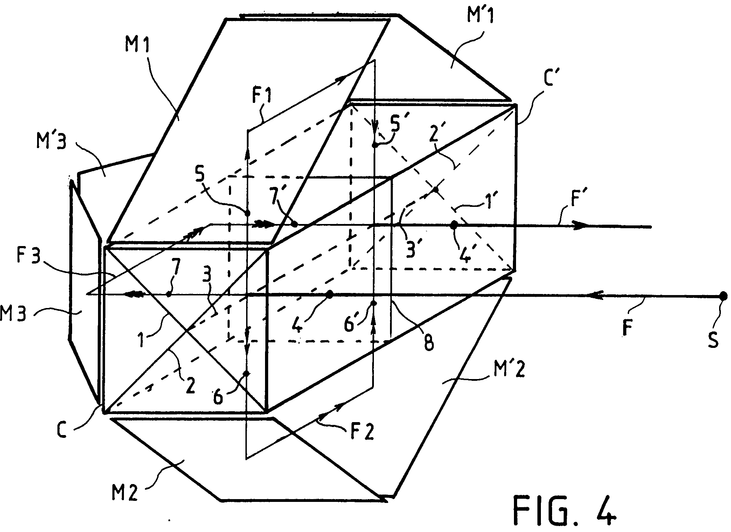

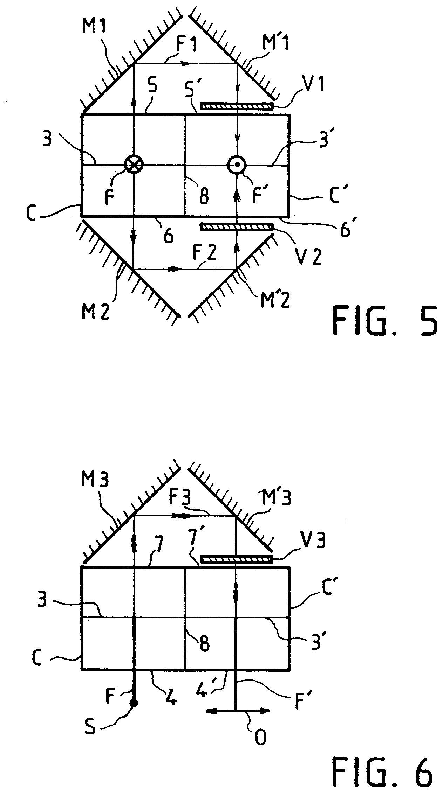

Dans le dispositif représenté aux Figs. 4 à 6, une source S émet un faisceau de lumière blanche, symbolisé par le rayon F, vers un cube séparateur C, comportant deux surfaces planes traitées 1 et 2 qui se coupent à angle droit en leur milieu, leur intersection portant le repère 3. En pratique, le cube C peut être formé par la réunion en X de deux miroirs dichroïques ou, de façon plus courante, par assemblage de quatre prismes identiques à section en triangle rectangle isocèle, dont au moins l'une des faces destinées à venir à l'intérieur du cube est traitée.

Dans le cube C, les faces 1 et 2 réfléchissent par exemple respectivement la lumière bleue et la lumière rouge du faisceau de lumière blanche F arrivant perpendiculairement sur la face 4, en laissant passer la lumière verte. Des faces 5, 6 et 7 du cube C, sont donc issus respectivement un faisceau de lumière bleue, un faisceau de lumière rouge et un faisceau de lumière verte, symbolisés par les rayons F1, F2 et F3 qui, avec F, sont dans un même plan perpendiculaire à la ligne d'intersection 3.

Les moyens de recombinaison du dispositif consistent en un cube recombineur C′ dont les surfaces traitées 1′ et 2′ se croisent en 3′ et ont respectivement les mêmes propriétés que les surfaces traitées 1 et 2 du cube C, à savoir que la surface 1′ réfléchit la lumière bleue et la surface 2′ la lumière rouge. En regard des faces 5′, 6′, 7′, sont placées des valves optiques V1, V2, V3, non représentées à la Fig. 4 pour des raisons de clarté. Celles-ci sont par exemple des valves optiques à cristal liquide nématique en hélice, ou smectique, ou ferroélectrique, etc.

Selon une caractéristique importante de l'invention, les cubes C et C′ sont disposés l'un par rapport à l'autre de telle façon que les intersections 3 et 3′ soient alignées et que les surfaces 1 et 1′, d'une part, et les surfaces 2 et 2′, d'autre part, soient dans un même plan. Dans l'exemple de réalisation montré, les deux cubes C et C′ sont accolés en 8 et, en pratique, ils sont formés sans solution de continuité en un seul bloc en forme de parallélépipède de section carrée.

Le faisceau F1, au-delà de la face 5 du cube séparateur C, subit une double réflexion, de manière à ce qu'il tombe sur la face 5′ du cube recombineur C′ située dans le prolongement de la face 5, après modulation dans la valve V1. Il en va de même pour les faisceaux F2 et F3 et, selon l'invention, les paires de miroirs M1 et M′1, M2 et M′2, M3 et M′3 affectés à cette double réflexion sont disposés de façon identique par rapport aux deux cubes C et C′. Dans la forme de réalisation montrée, les miroirs de chaque paire sont inclinés à 45°, symétriquement, en regard de deux faces en prolongement des cubes, soit les faces 5, 5′ ou 6, 6′ ou 7, 7′.

Les faisceaux F1, F2 et F3 sont alors recombinés dans le cube C′, de manière à ressortir par la face 4′ sous la forme d'un faisceau unique symbolisé par le rayon F′. Parmi les valves optiques qui sont utilisées dans les systèmes de visualisation par projection, certaines nécessitent un éclairage en lumière polarisée. La lumière blanche émise par les sources généralement utilisées dans ces systèmes ne l'étant pas, il faut donc la polariser avant de la faire parvenir aux valves. Il existe des moyens aptes à polariser des faisceaux de lumière avec des rendements supérieurs à 80 %, et à transformer simultanément des faisceaux à section carrée ou circulaire en des faisceaux à section à peu près rectangulaire.

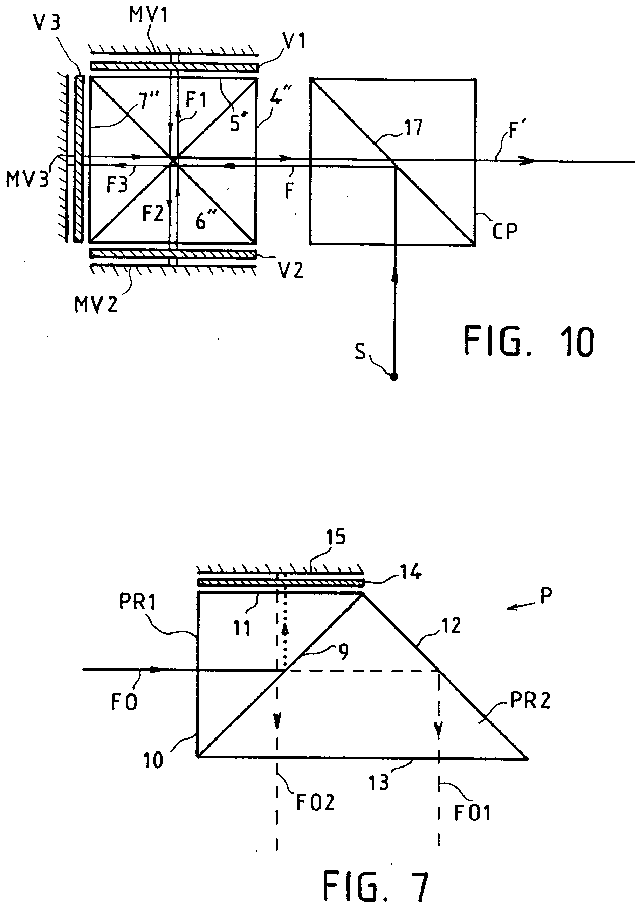

La Fig. 7 illustre un dispositif de polarisation P ayant ces caractéristiques mais qui, en plus du gain en rendement lumineux qu'entraîne son utilisation, se prête particulièrement bien à une intégration dans un appareil de projection conforme à l'invention, du fait qu'il n'augmente pratiquement pas l'encombrement, et qu'il ne remet en cause ni l'égalité des distances optiques entre la source et les valves, ni la minimisation des distances séparant les valves de l'optique de projection.

Le dispositif de polarisation P comprend deux prismes PR1 et PR2 dont les sections sont des triangles rectangles isocèles. Ils sont accolés par contact entre la grande face latérale du prisme PR1 et l'une des petites faces latérales du prisme PR2. La surface commune 9 comporte un traitement, par exemple de type multi-couches, et constitue la surface de séparation du dispositif. De plus, une lame retardatrice du type quart d'onde 14, et un miroir 15 sont disposés parallèlement en regard de la face 11 du prisme PR1. La surface d'entrée du faisceau de lumière à polariser, symbolisé par le rayon FO, est la face 10 du prisme PR1. De préférence, cette surface est à peu près carrée. Le faisceau FO de lumière non polarisée est séparé en deux faisceaux FO1 et FO2 au niveau de la surface de séparation 9. La lumière du faisceau transmis FO1 est polarisée rectilignement, parallèlement au plan du dessin (représentation en traits tirets). Elle poursuit son chemin dans le prisme PR2, se réfléchit sur sa face 12, et sort par sa face 13.

Le faisceau FO2, réfléchi par la surface 9, transporte de la lumière polarisée rectilignement, perpendiculairement au plan du dessin (représentation en pointillé). Il sort du prisme PR1 par sa face 11, traverse la lame retardatrice 14 du type quart d'onde, se réfléchit sur le miroir 15, retraverse la lame 14 et repénètre dans le prisme PR1. La lumière du faisceau FO2 est alors polarisée, rectilignement, parallèlement au plan du dessin, comme le faisceau FO1. Elle traverse donc la surface 9 et sort du dispositif par la face 13 du prisme PR2. En sortie, les faisceaux FO1 et FO2 sont juxtaposés. L'ensemble P fournit par conséquent un faisceau unique de lumière uniformément polarisée, de section à peu près rectangulaire. On remarque en outre que les chemins parcourus par les deux faisceaux FO1 et FO2 jusqu'à la sortie du prisme PR2 sont de mêmes longueurs.

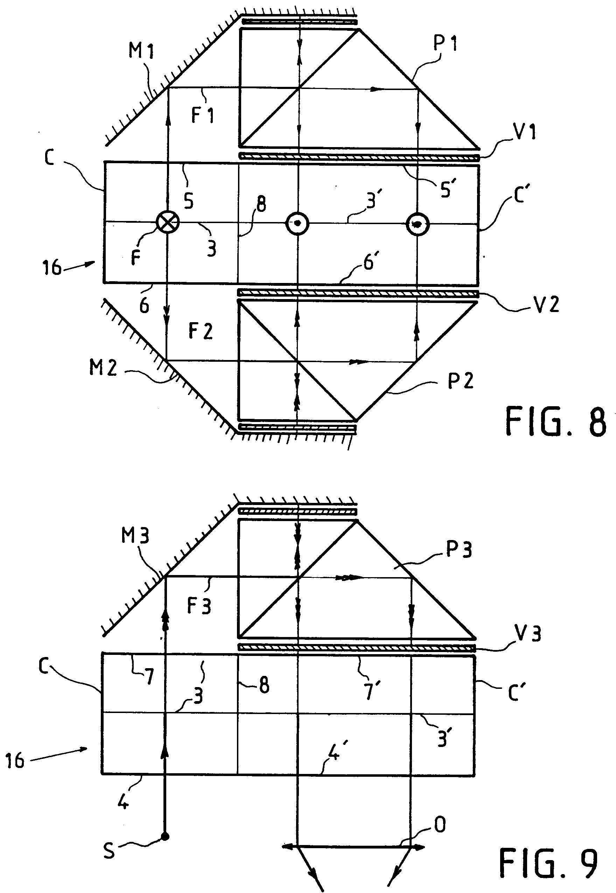

Les Figs. 8 et 9 illustrent un dispositif de visualisation du type de celui des Figs. 4 à 6, dans lequel sont incorporés des moyens de polarisation sous la forme de l'ensemble P.

Dans le bloc 16 regroupant le cube séparateur C et le cube recombineur C', ce dernier - bien qu'on lui conserve sa dénomination de "cube" - a maintenant la forme d'un parallélépipède à section carrée, délimité par la ligne fictive 8, dont les faces latérales rectangulaires 4' à 7' correspondent en dimensions aux valves optiques V1, V2 et V3.

D'autre part, en regard des faces de sortie 5, 6, 7 du cube séparateur C, sont toujours prévus les miroirs de réflexion M1 à M3 inclinés à 45°, alors qu'en regard des valves V1, V2, V3 et des faces correspondantes 5', 6', 7' du cube recombineur C', des ensembles de polarisation P1, P2, P3 remplacent les miroirs M'1, M'2, M'3 du dispositif des Figs. 4 à 6.

Les trois ensembles P1, P2, P3 polarisent respectivement les trois faisceaux F1, F2, F3 séparés par le cube séparateur C, après qu'ils ont été réfléchis par les miroirs M1, M2, M3, et les transforment chacun en deux faisceaux juxtaposés au niveau des valves V1 à V3. Comme on l'a remarqué précédemment, les trajets optiques des deux faisceaux juxtaposés dans les ensembles P1 à P3 sont de même longueur, de sorte qu'il en est de même pour les six trajets différents de la lumière entre la source S et les valves V1, V2, V3, la distance optique de celles-ci à l'optique de projection 0 restant par ailleurs minimale. En pratique, les ensembles P1 à P3 permettent d'améliorer le rendement lumineux d'un facteur 2, environ, et de réduire l'encombrement du dispositif de visualisation d'environ 30 %.

Dans le dispositif de visualisation de la Fig. 10, les valves V1, V2, V3 travaillent en réflexion. Les moyens de séparation et de recombinaison de la lumière sont constitués par un même élément, soit un cube C" du type décrit précédemment. Les valves V1, V2, V3, auxquelles sont associés parallèlement des miroirs MV1, MV2 et MV3 sont disposées en regard des faces 5", 6" et 7" du cube C".

En regard de la face d'entrée 4", est placé un cube polarisant CP présentant une surface séparatrice 17. Le faisceau F de lumière blanche émise par la source S se réfléchit sur la surface séparatrice 17, puis se dirige vers la surface d'entrée 4" du cube C". Il en résulte trois faisceaux F1, F2, F3 émergeant du cube C" respectivement par les faces 5", 6", 7", et correspondant aux couleurs rouge, verte et bleue. Chacun des faisceaux traverse ensuite l'une des valves V1, V2, V3, se réfléchit sur le miroir associé MV1, MV2, MV3, et revient sur lui-même. Le faisceau unique F' résultant de la recombinaison repasse par la face 4" et traverse le cube polarisant CP pour atteindre l'optique de projection, non représentée.

Cette architecture comportant des valves optiques en réflexion permet d'optimiser le rendement lumineux du système d'éclairage et l'homogénéité de l'image, les distances optiques de la source S aux trois valves étant identiques. Les moyens de séparation et de recombinaison sont d'autre part simplifiés, le même élément C" ayant les deux fonctions. Bien entendu, dans une variante, le cube polarisant CP peut être utilisé en transmetteur de la lumière provenant de la source S, la lumière du faisceau F' étant alors réfléchie par la surface séparatrice 17 avant d'atteindre l'optique de projection.

**Revendications**

1) Dispositif de visualisation en couleur mettant en oeuvre des moyens de séparation d'un faisceau de lumière blanche en trois faisceaux de lumières colorées, trois valves optiques, des moyens de recombinaison et une optique de projection, dans lequel lesdits moyens de recombinaison sont un cube recombineur, les valves sont placées en regard de trois faces du cube recombineur parallèles à l'intersection de ses surfaces traitées, et l'optique de projection au-delà de la quatrième de ces faces, caractérisé en ce que lesdits moyens de séparation sont un cube séparateur (C) dont l'intersection (3) de ses surfaces traitées (1, 2) est sur la même ligne que ladite intersection (3') du cube recombineur (C'), en ce que les surfaces traitées (1, 2; 1', 2') du cube séparateur (C) et du cube recombineur (C') sont deux à deux dans un même plan, et en ce que des moyens de réflexion identiques sont disposés sur les trajets des trois faisceaux de lumières colorées (F1, F2, F3) à l'extérieur des cubes (C, C') jusqu'à leurs valves respectives, de manière que les distances optiques entre la source (S) de lumière blanche et lesdites valves soient elles-mêmes identiques.

2) Dispositif selon la revendication 1, caractérisé en ce que le cube séparateur (C) et/ou le cube recombineur (C') sont composés de deux miroirs dichroïques plans se coupant en leur milieu à angle droit.

3) Dispositif selon la revendication 1, caractérisé en ce que le cube séparateur (C) et/ou le cube recombineur (C′) sont formés par assemblage de quatre prismes droits identiques dont au moins une des faces à l'intérieur du cube est traitée.

**4)** Dispositif selon l'une des revendications 1 à 3, caractérisé en ce que les cubes séparateur (C) et recombineur (C′) sont accolés l'un à l'autre.

**5)** Dispositif selon la revendication 4, caractérisé en ce que les cubes séparateur (C) et recombineur (C′) sont en un seul bloc.

**6)** Dispositif selon l'une des revendications 1 à 5, caractérisé en ce que lesdits moyens de réflexion entre les cubes sépateur (C) et recombineur (C′) comprennent des paires de miroirs (M1, M′1 ; M2, M′2 ; M3, M′3).

**7)** Dispositif selon l'une des revendications 1 à 5, caractérisé en ce qu'à chaque valve optique (V1, V2, V3), sont associés des moyens de polarisation et de division de chacun des faisceaux de lumières colorées (F1, F2, F3) en deux faisceaux juxtaposés, lesquels forment à l'entrée de chaque valve un faisceau unique de lumière uniformément polarisée.

**8)** Dispositif selon la revendication 7, caractérisé en ce que lesdits moyens de polarisation et de division consistent en des ensembles (P1, P2, P3) comprenant chacun deux prismes (PR1, PR2) de section en triangle rectangle isocèle, accolés par contact de la grande face latérale du prisme (PR1) avec l'une des petites faces latérales du prisme (PR2), la surface commune (9) étant une surface de séparation de la lumière, et comprenant de plus une lame retardatrice du type quart d'onde (14) et un miroir (15) en regard de la face latérale du prisme (PR1) opposée à la grande face latérale du prisme (PR2), laquelle est adjacente à la valve associée, lesdits ensembles (P1, P2, P3) recevant les faisceaux de lumières colorées après que ceux-ci aient été réfléchis par un miroir (M1, M2, M3).

**9)** Dispositif selon l'une des revendications 1 à 3, caractérisé en ce que les cubes séparateur et recombineur sont formés par un même élément (C″), un cube polarisant (CP) étant placé adjacent à la face (4″) d'entrée du faisceau (F) de lumière blanche, et de sortie du faisceau recombiné (F′), le cube polarisant (CP) étant destiné à réfléchir le faisceau de lumière blanche et à transmettre le faisceau recombiné (F′) vers l'optique de projection ou, inversement, à transmettre le faisceau (F) de lumière blanche et à réfléchir le faisceau recombiné (F′).

**10)** Dispositif selon l'une des revendications 1 à 9, caractérisé en ce que les valves optiques (V1, V2, V3) sont des valves optiques à cristal liquide nématique en hélice, ou cristal liquide smectique, ou ferroélectrique.

FIG. 1

FIG. 2

FIG. 3

FIG. 4

FIG. 5

FIG. 6

FIG. 10

FIG. 7

FIG. 8

FIG. 9

EP 0 487 407 A1

Office européen
des brevets

**RAPPORT DE RECHERCHE EUROPEENNE**

Numero de la demande

EP    91 40 3115
Page 1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 361 559 (PHILIPS)<br>* colonne 13, ligne 12 - ligne 59 *<br>* colonne 14, ligne 1 - ligne 5 *<br>* colonne 6, ligne 30 - ligne 33 *<br>* figures 7A,7B *<br>--- | 1,2,6,10 | G02B27/28<br>H04N9/31 |
| X<br>A | WO-A-8 810 545 (FRAUNHOFER)<br>* abrégé; figure 1 *<br>--- | 1,3,9<br>4,5 | |
| X | DE-A-3 829 598 (HEINRICH)<br>* colonne 6, ligne 65 - colonne 7, ligne 5;<br>figures 7,8 * | 1,2 | |
| A | * colonne 6, ligne 22 - ligne 38; figures 4,5 *<br>--- | 9 | |
| A | EP-A-0 376 395 (PHILIPS)<br>* abrégé; figure 2 *<br>--- | 7,8 | |
| A | GB-A-768 727 (CARL-ZEISS-STIFTUNG)<br>* page 1, ligne 47 - ligne 63 *<br>* page 2, ligne 61 - ligne 91; figure 3A *<br>--- | 7,8 | |
| A | EP-A-0 325 361 (HEWLETT-PACKARD)<br>* colonne 12, ligne 15 - ligne 58; figure 10 *<br>* colonne 23, ligne 8 - ligne 47; figure 25 *<br>--- | 1 | DOMAINES TECHNIQUES RECHERCHES (Int. Cl.5)<br><br>G02B<br>H04N |
| A | EP-A-0 303 898 (SEIKO)<br>* colonne 4, ligne 6 - ligne 12 *<br>* colonne 7, ligne 3 - ligne 24; figure 11 *<br>--- | 1,10 | |
| A | FR-A-2 284 237 (HARENG)<br>* page 1, ligne 1 - ligne 6; figure 1 *<br>--- | 1,10 | |
| A | EP-A-0 294 898 (PHILIPS)<br>* colonne 3, ligne 10 - ligne 14 *<br>* colonne 4, ligne 26 - ligne 51; figure 2 *<br>--- | 1,10 | |
| D,A | EP-A-0 258 927 (PHILIPS)<br>* page 3, ligne 14 - ligne 22; figure 1 *<br>* page 5, ligne 30 - page 6, ligne 16; figure 2<br>* | 1-3 | |

Le présent rapport a été établi pour toutes les revendications

| Lieu de la recherche | Date d'achèvement de la recherche | Examinateur |
|---|---|---|
| LA HAYE | 10 MARS 1992 | SOULAIRE D.G. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
.........................................................
& : membre de la même famille, document correspondant

EPO FORM 1503 03.82 (P0402)

11

EP 0 487 407 A1

## RAPPORT DE RECHERCHE EUROPEENNE

Office européen
des brevets

Numero de la demande

EP    91 40 3115
Page 2

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| | --- | | |
| P,A | EP-A-0 407 830 (HOFFMANN-LA-ROCHE) <br> * page 5, ligne 20 - ligne 49; figures 5,6 * <br> * page 7, ligne 55 - page 8, ligne 4; figure 10 * | 1,7,8 | |
| | --- | | |
| A | PATENT ABSTRACTS OF JAPAN <br> vol. 10, no. 206 (P-478) ( TOSHIBA ) 8 Mars 1986 <br> & JP-A-61 047 923 <br> * abrégé * | 4,5 | |
| | ----- | | |

DOMAINES TECHNIQUES RECHERCHES (Int. Cl.5 )

Le présent rapport a été établi pour toutes les revendications

| Lieu de la recherche | Date d'achèvement de la recherche | Examinateur |
|---|---|---|
| LA HAYE | 10 MARS 1992 | SOULAIRE D.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)